# EUROPÄISCHE PATENTSCHRIFT

(11) **EP 0 446 978 B1**
(45) Veröffentlichungstag und Bekanntmachung des Hinweises auf die Patenterteilung: **29.12.1993**
(21) Anmeldenummer: 91200376.1
(22) Anmeldetag: 21.02.1991
(51) Int. Cl.: E01B 7/02, B23K 35/30

(54) **Gleitlagerung**
Slide coating
Revêtement de glissement

(30) Priorität: 10.03.1990 DE 4007734
(43) Veröffentlichungstag der Anmeldung: 18.09.1991
(73) Patentinhaber: METALLGESELLSCHAFT Aktiengesellschaft, 60015 Frankfurt (DE); SCHRECK-MIEVES GMBH, 44225 Dortmund (DE)
(72) Erfinder: Reimann, Hartwig, Dr., W-6237 Liederbach (DE); Kruske, Gerhard, W-6370 Oberursel 5 (DE); Lagies, Klaus, W-4600 Dortmund 12 (DE)
(74) Vertreter: Rieger, Harald, Dr.

(56) Entgegenhaltungen:
- EP-A- 0 124 134
- DE-A- 3 709 126

## Beschreibung

Die Erfindung betrifft eine Gleitlagerung, bestehend aus mit einer ebenen Abstützung oder Führung aus Eisenwerkstoff, vorzugsweise Stahl oder Sphäroguß, metallurgisch verbundenen Gleitschicht aus Nickelbasislegierung, für geradlinig oszillierende Bewegungen ausführende Bauteile von Maschinen, insbesondere für aufeinandergleitende Bauteile von Schienenweichen, vorzugsweise für die Gleitstühle von Weichenzungen. Eine solche Gleitlagerung ist aus der DE-A-3709126 bekannt.

Die Gleitstühle von Schienenweichen bestehen aus ebenen auf Tragkörpern befestigten Lagerplatten aus Eisenwerkstoff, auf denen die Weichenzungen seitlich verschiebbar gelagert sind und die einer ständigen Wartung durch Reinigen und Schmieren bedürfen, um die Reibung und den Verschleiß möglichst niedrig zu halten.

Zur Senkung des dabei auftretenden Wartungsaufwands ist es bekannt, die Gleitfläche des Gleitstuhls mit einer reibungsarmen und wartungsfreien Kunststoff-Gleitschicht zu versehen (DE-U-1 918 253). Da bei dieser Anordnung die Kunststoff-Gleitschicht der unmittelbaren Einwirkung der Atmosphärilien, agressiver Medien sowie ggf. thermischer Belastungen, beispielsweise beim Auftauen eingefrorener Weichen, ausgesetzt ist, wird die Kunststoff-Gleitschicht schon nach relativ kurzer Betriebzeit zerstört. Um das zu vermeiden, ist in der DE-B-2 702 645 vorgesehen, die Kunststoff-Gleitschicht mit der Unterseite der Weichenzunge, von dieser nach oben abgedeckt, zu verbinden. Diese Anordnung hat sich nicht bewährt, da die Kunststoff-Gleitschicht nach vergleichsweise kurzer Betriebszeit verschlissen ist. Die EP-A-0 232 726 schlägt deshalb einen Gleitstuhl vor, bei dem die Gleitfläche aus mehreren Gleitelementen aus einem selbstschmierenden Gleitwerkstoff, insbesondere Graphitbronze, besteht, die die Oberfläche des Gleitstuhls überragen. Bekannt ist auch, die Gleitfläche des Gleitstuhls mit einer porösen Gleitsinterwerkstoffschicht, wie Zinnbronze, (DE-A-3 743 368) oder auf Eisenbasis, wie Kupfer-Kohlenstoff-Eisenbasis, mit einem infiltrierten Gleitwerkstoff, wie Kunststoff, zu versehen (DE-C-2 856 850). Diese Ausführungsformen besitzen zwar recht gute Gleit- und Schmiereigenschaften, jedoch nur einen vergleichsweise niedrigen Verschleißwiderstand. Schließlich ist in der DE-A-3 709 126 eine Gleitlagerung für aufeinandergleitende Gleisteile, wie Weichenteile in Form von z.B. Gleitstuhl und Weichenzunge oder Weichenstell- und -verschließeinrichtungen, beschrieben, bei der im Bereich der aufeinandergleitenden Oberflächen die Gleisteile mit harten und Notlaufeigenschaften besitzenden Gleitschichten versehen sind. Diese Gleitschichten enthalten Molybdän und sind mittels Plasma- oder Flammspritzverfahren aufgebracht. Bei einer anderen Ausführungsform besteht die Gleitschicht aus einer ternären oder quarternären Legierung auf Kobalt- oder Nickelbasis mit Zusätzen wie Molybdän, Chrom und Silizium, die mit den aufeinandergleitenden Oberflächenbereichen der Gleitteile verschweißt sind. Diese Gleitschichten sollen ohne geometrische Veränderung der Gleisteile sicherstellen, daß diese ohne Schmiermittel aufeinandergleiten können. Diese Gleisteile haben jedoch bisher keinen Eingang in die Praxis gefunden, weil ihre Festigkeit niedrig und der Reibungskoeffizient relativ hoch ist. Im übrigen besteht nur ein adhäsiver Verbund zwischen Gleitschicht und Gleisteil.

Es ist die Aufgabe vorliegender Erfindung, Gleitlagerungen des eingangs beschriebenen Aufbaus bereitzustellen, deren Gleitschicht eine hohe Verschleißfestigkeit bei ausreichender Zähigkeit und niedrigem Reibungskoeffizienten gegenüber abrasiven Beanspruchungen besitzt, eine hohe Korrosionsbeständigkeit aufweist und unlösbar mit der Abstützung bzw. Führung aus Eisenwerkstoff verbunden ist.

Diese Aufgabe wird dadurch gelöst, daß die aus selbstfließender Ni-Cr-B-Si-Legierung, sogenannter Nickelhartlegierung, gebildete homogene, bei 870 bis 1200°C eingeschmolzene Gleitschicht ein feinkörniges Gefüge mit feinverteilter arteigener Hartphase boridischer und/oder karbidischer Natur besitzt. Das Matrixmetall Nickel bildet mit dem Chrom und mit den Metalloiden Bor, Silizium, Kohlenstoff Hartphasen, die sich im Gefüge als primär oder sekundär erstarrte Verbindungen oder in Form binärer oder ternärer Eutektika ausscheiden. Diese arteigenen Hartphasen, die bis zu 70 Vol.-%, vorzugsweise 40 bis 60 Vol.-%, in der Gleitschicht enthalten sind und einen spröden Charakter sowie eine hohe Härte aufweisen, bestimmen im Verbund mit der zähen Nickelmatrix die Eigenschaften der Hartlegierung hinsichtlich Verschleißfähigkeit bei abrasiver Beanspruchung und die Korrosionsbeständigkeit. Letzteres ist besonders wertvoll, da gebildete Korrosionsprodukte die auf Gleitung beanspruchten Oberflächen oft erheblich mechanisch verschleißen können. Die Gleitschichten sind homogen, rißfrei, unmagnetisch und besitzen eine hervorragende Haftung zur beschichteten Abstützung bzw. Führung.

Vorzugsweise setzt sich der Ni-Cr-B-Si-Legierungstyp aus
6 bis 28 Gew.-% Chrom
1,5 bis 3,5 Gew.-% Bor
1,0 bis 4,5 Gew.-% Silizium
0,15 bis 1,2 Gew.-% Kohlenstoff Rest Nickel
zusammen, wobei ggf. noch 3 bis 20 Gew.-% Eisen und/oder 2 bis 10 Gew.-% Phosphor zulegiert sein können. Phosphor senkt die Viskosität, verbessert die Benetzung der Matrix und erniedrigt die Verarbeitungstemperatur der Legierung.

Mit steigenden Metalloidgehalten steigt die Härte durch Bildung vermehrter Hartphasenanteile im Gefüge, während die Breite des Schmelzbereichs abnimmt und die Liquidustemperatur sinkt. Wenn man die Härte als einen maßgeblichen Faktor für die Verschleißfestigkeit betrachtet, nimmt demnach mit steigenden Metalloidgehalten der Widerstand gegen abrasive Beanspruchung zu, womit allerdings durch Abnahme der zähen Matrixbestandteile im Gefüge auch die Sprödigkeit zunimmt. Die Senkung des Schmelzpunktes macht darüber hinaus die Verarbeitung der verschleißfesteren Legierungstypen wirtschaftlicher.

Treten besonders hohe Anforderungen an die Verschleißfestigkeit gegenüber abrasiver Beanspruchung der Gleitschicht auf, so können in der Gleitschicht noch 30 bis 50 Vol.-% artfremder Hartstoff in Form von Chrom-, Wolfram-, Molybdän-, Titan-, Niob-, Vanadium-Carbiden, -Nitriden, -Siliziden einzeln oder zu mehreren eingelagert sein. Das Legierungsgefüge ist ohne größere Aufmischung mit dem Grundwerkstoff über die Schichtdicke nahezu konstant.

In der Gleitschicht können ferner noch 0,5 bis 5 Gew.-% Graphit, 5 bis 40 Gew.-% Molybdän, 3 bis 25 Gew.-% Kupfer einzeln oder zu mehreren als Festschmierstoff eingelagert sein, wobei sich Molybdän und Kupfer im Mischkristall ablagern, der dadurch nicht übermäßig härtet und somit eine Verbesserung der Notlaufeigenschaften bewirkt. Graphit liegt in nicht auflegierter Form vor.

Die aus Stahl, Sphäroguß oder dergleichen Werkstoffen bestehende Abstützung bzw. Führung ist mit einer metallurgisch angeschlossenen Gleitschicht mit einer Dicke von 0,8 bis 10 mm, vorzugsweise 2 bis 4 mm, beschichtet.

Der Ni-Cr-B-Si-Legierungstyp wird in der Weise verarbeitet, daß er in Pulverform ggf. unter Zusatz artfremden Hartstoffs und/oder Festschmierstoffs auf eine entsprechend vorbereitete Oberfläche der Abstützung bzw. Führung aufgetragen und bei 870 bis 1200°C eingeschmolzen wird.

Für die Herstellung der Gleitlagerung auf der Abstützung bzw. Führung kommen drei Verfahren in Betracht. Einmal ist es möglich, das Hartlegierungspulver durch thermisches Spritzen aufzutragen und gleichzeitig einzuschmelzen. Die andere Variante besteht darin, daß das Pulver durch thermisches Spritzen aufgetragen und nachfolgend unter Vakuum eingeschmolzen wird. Der Aufwand für die Herstellung der Gleitschicht ist am niedrigsten, wenn das Pulver auf die Abstützung bzw. Führung aufgestreut und nachfolgend unter Vakuum von 10⁰ bis 10⁻³ bar oder in inerter Atmosphäre eingeschmolzen wird.

Im folgenden ist die Erfindung anhand einer Zeichnung näher und beispielhaft erläutert.

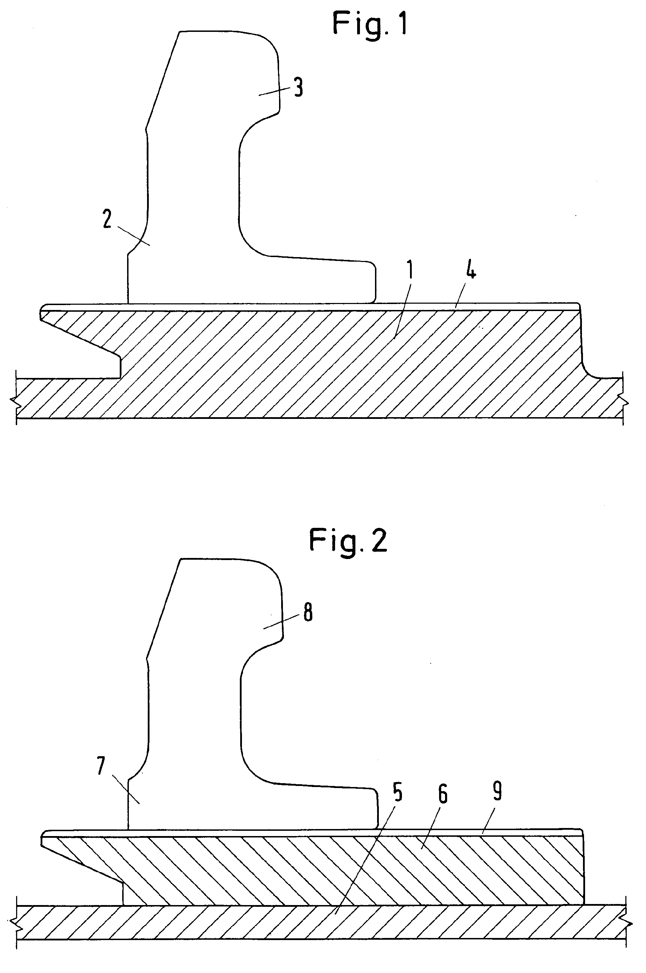

Fig. 1 zeigt einen Querschnitt durch eine einteilige Weichenrippenplatte (1) aus Sphäroguß mit auf der dem Fuß (2) der Weichenzunge (3) zugewandten Fläche mit metallischer Bindung angebrachten 5 mm dicken Gleitschicht (4) aus selbstfließender Legierung auf Nickelbasis mit eingelagerten Karbiden des Wolframs.

Unterschiedlich zu Fig. 1 zeigt der Querschnitt nach Fig. 2 eine Weichenrippenplatte (5) aus Stahl, auf die ein aus Stahl geschmiedeter Gleitstuhl (6) aufgeschweißt ist. Der Gleitstuhl (6) ist auf der dem Fuß (7) der Weichenzunge (8) zugekehrten Fläche mit einer 5 mm dicken Gleitschicht (9) aus selbstfließender Legierung auf Nickelbasis mit eingelagerten Karbiden des Wolframs beschichtet.

Der mit der Erfindung erzielte Vorteil besteht insbesondere darin, daß die eine Härte von 45 bis 62 HRC, vorzugsweise 56 bis 60 HRC, aufweisende, metallurgisch mit der Abstützung bzw. der Führung verbundene korrosionsbeständige Gleitschicht eine Druckfestigkeit von > 2000 bis 2500 N/mm² bei geringer Verformung von maximal 4 % besitzt und neben günstigen Verschleißeigenschaften ein ausgezeichnetes Gleitverhalten - der Reibungskoeffizient ist < 0,15 - zeigt, wobei der abrasive Verschleiß nahezu unbedeutend ist.

## Patentansprüche

1. Gleitlagerung, bestehend aus mit einer ebenen Abstützung oder Führung aus Eisenwerkstoff, vorzugsweise Stahl oder Sphäroguß, metallurgisch verbundenen Gleitschicht aus Nickelbasislegierung, für geradlinig oszillierende Bewegungen ausführende Bauteile von Maschinen, insbesondere für aufeinandergleitende Bauteile von Schienenweichen, vorzugsweise für die Gleitstühle der Weichenzungen, dadurch gekennzeichnet, daß die aus selbstfließender Ni-Cr-B-Si-Legierung gebildete homogene, bei 870 bis 1200°C eingeschmolzene Gleitschicht ein feinkörniges Gefüge mit feinverteilter arteigener Hartphase boridischer und/oder karbidischer Natur besitzt.

2. Gleitlagerung nach Anspruch 1, dadurch gekennzeichnet, daß die Gleitschicht aus einer Ni-Cr-B-Si-Legierung der Zusammensetzung
6 bis 28 Gew.-% Chrom
1,5 bis 3,5 Gew.-% Bor
1,0 bis 4,5 Gew.-% Silizium
0,15 bis 1,2 Gew.-% Kohlenstoff Rest Nickel
besteht.

3. Gleitlagerung nach den Ansprüchen 1 und 2, dadurch gekennzeichnet, daß die Gleitschicht bis zu 70 Vol.-%, vorzugsweise 40 bis 60 Vol.-%, arteigene Hartphasen enthält.

4. Gleitlagerung nach den Ansprüchen 1 bis 3, dadurch gekennzeichnet, daß in der Gleitschicht 30 bis 50 Vol.-% artfremder Hartstoffe in Form von Chrom-, Wolfram-, Molybdän-, Titan-, Niob-, Vanadium-Karbiden, -Nitriden, -Siliziden einzeln oder zu mehreren eingelagert sind.

5. Gleitlagerung nach einem oder mehreren der Ansprüche 1 bis 4, dadurch gekennzeichnet, daß in der Gleitschicht noch 0,5 bis 5 Gew.-% Graphit, 5 bis 40 Gew.-% Molybdän, 3 bis 25 Gew.-% Kupfer als Festschmierstoff einzeln oder zu mehreren eingelagert ist.

6. Gleitlagerung nach einem oder mehreren der Ansprüche 1 bis 5, dadurch gekennzeichnet, daß die Ni-Cr-B-Si-Legierung mit 3 bis 20 Gew.-% Eisen legiert ist.

7. Gleitlagerung nach einem oder mehreren der Ansprüche 1 bis 6, dadurch gekennzeichnet, daß die Ni-Cr-B-Si-Legierung mit 2 bis 10 Gew.-% Phosphor legiert ist.

8. Gleitlagerung nach den Ansprüchen 1 bis 7, dadurch gekennzeichnet, daß die Gleitschicht eine Dicke von 0,8 bis 10 mm, vorzugsweise 2 bis 4 mm, aufweist.

9. Verfahren zur Herstellung der Gleitlagerung nach den Ansprüchen 1 bis 8, dadurch gekennzeichnet, daß pulverförmige Ni-Cr-B-Si-Legierung ggf. unter Zusatz von artfremdem Hartstoff und/oder Festschmierstoff auf eine entsprechend vorbereitete Oberfläche der Abstützung oder Führung aufgetragen wird.

10. Verfahren nach Anspruch 9, dadurch gekennzeichnet, daß das Pulver durch thermisches Spritzen aufgetragen und gleichzeitig eingeschmolzen wird.

11. Verfahren nach Anspruch 9, dadurch gekennzeichnet, daß das Pulver durch thermisches Spritzen aufgetragen und nachfolgend unter Vakuum eingeschmolzen wird.

12. Verfahren nach Anspruch 9, dadurch gekennzeichnet, daß das Pulver aufgestreut und nachfolgend unter Vakuum oder in inerter Atmosphäre eingeschmolzen wird.

## Claims

1. A sliding surface bearing consisting of a sliding surface layer, which consists of a nickel-base alloy and is metallurgically joined to a flat support or guide, preferably of steel or modular cast iron, for rail switch components which perform straight reciprocating movements, preferably for the slide chairs for the switch tongues, characterized in that the sliding surface layer is homogeneous and consists of a self-flowing Ni-Cr-B-Si alloy and has been melted at 870 to 1200°C and has a fine-grained structure with a finely divided boride and/or carbide hard phase which is of the same kind.

2. A sliding surface bearing according to claim 1, characterized in that the sliding surface layer consists of an Ni-Cr-B-Si alloy composed of
6 to 28 % by weight chromium,
1.5 to 3.5 % by weight boron,
1.0 to 4.5 % by weight silicon,
0.15 to 1.2 % by weight carbon, balance nickel.

3. A sliding surface bearing according to claims 1 and 2, characterized in that the sliding surface layer contains up to 70% by volume, preferably 40 to 60 % by volume, hard phases of the same kind.

4. A sliding surface layer according to claims 1 to 3, characterized in that 30 to 50 % by volume of hard substances which are of a different kind and consist of carbides nitrides and/or silicides of chromium, tungsten, molybdenum, titanium, niobium, and vanadium are included individually or in a combination in the sliding surface layer.

5. A sliding surface bearing according to any or more of claims 1 to 4, characterized in that 0.5 to 5 % by weight graphite, 5 to 40 % by weight molybdenum, 3 to 25 % by weight copper as solid lubricants are additionally included individually or in a combination in the sliding surface layer.

6. A sliding surface bearing according to any of claims 1 to 5, characterized in that 3 to 20 % iron are alloyed to the Ni-Cr-B-Si alloy.

7. A sliding surface bearing according to any of claims 1 to 6, characterized in that 2 to 10 % by weight phosphorus are alloyed to the Ni-Cr-B-Si alloy.

8. A sliding surface bearing according to claims 1 to 7, characterized in that the sliding surface layer has a thickness of 0.8 to 10 mm, preferably of 2 to 4 mm.

9. A process of manufacturing the sliding surface bearing according to claims 1 to 8, characterized in that a Ni-Cr-B-Si alloy powder optionally with an addition of a hard material and/or a solid lubricant which is not of the same kind is deposited on a properly prepared surface of the support or guide.

10. A process according to claim 9, characterized in that the powder is applied by thermal spraying and is melted at the same time.

11. A process according to claim 9, characterized in that the powder is deposited by thermal spraying and is subsequently melted under a vacuum.

12. A process according to claim 9, characterized in that the powder is deposited by being sprinkled and is subsequently melted under a vacuum or in an inert atmosphere.

## Revendications

1. Palier lisse, constitué d'une couche de glissement en alliage à base de nickel, reliée métallurgiquement à un appui ou à un guidage plan en matériau ferreux et de préférence, en acier ou en fonte à graphite sphéroidal, et destiné à des éléments de machine effectuant des mouvements oscillants rectilignes, notamment à des éléments qui glissent l'un sur l'autre d'aiguillage de rails, de préférence pour les coussinets de glissement des lames d'aiguillage, caractérisé en ce que la couche de glissement, qui est formée d'un alliage de Ni-Cr-B-Si s'écoulant de soi-même, qui est homogène et qui est fondue entre 870 et 1200°C, a une structure en grains fins ayant une phase dure caractéristique finement répartie de nature borure et/ou carbure.

2. Palier lisse suivant la revendication 1, caractérisé en ce que la couche de glissement est constituée d'un alliage Ni-Cr-B-Si de composition
6 à 28 % en poids de chrome
1,5 à 3,5 % en poids de bore
1,0 à 4,5 % en poids de silicium
0,15 à 1,2 % en poids de carbone,
le reste étant du nickel.

3. Palier lisse suivant la revendication 1 ou 2, caractérisé en ce que la couche de glissement contient jusqu'à 70 % en volume et, de préférence, de 40 à 60 % en volume de phase dure caractéristique.

4. Palier lisse suivant l'une des revendications 1 à 3, caractérisé en ce que sont incorporés individuellement ou à plusieurs, dans la couche de glissement, de 30 à 50 % en volume de matières dures de nature étrangère, sous forme de siliciures, de carbures ou de nitrures, de chrome, de tungstène, de molybdène, de titane, de niobium et de vanadium.

5. Palier lisse suivant l'une ou plusieurs des revendications 1 à 4, caractérisé en ce qu'à la couche de glissement sont incorporés individuellement ou à plusieurs, de 0,5 à 5 % en poids de graphite, de 5 à 40 % en poids de molybdène, de 3 à 25 % en poids de cuivre servant de substances lubrifiantes solides.

6. Palier lisse suivant l'une ou plusieurs des revendications 1 à 5, caractérisé en ce que l'alliage Ni-Cr-B-Si est allié à 3 à 20 % en poids de fer.

7. Palier lisse suivant la revendication 1 à 6, caractérisé en ce que l'alliage Ni-Cr-B-Si est allié à 2 à 10 % en poids de phosphore.

8. Palier lisse suivant l'une des revendications 1 à 7, caractérisé en ce que la couche de glissement a une épaisseur de 0,8 à 10 mm et, de préférence, de 2 à 4 mm.

9. Procédé de fabrication du palier lisse suivant les revendications 1 à 8, caractérisé en ce qu'il consiste à déposer de l'alliage Ni-Cr-B-Si pulvérulent, le cas échéant avec addition d'une substance dure de nature étrangère et/ou d'un lubrifiant solide sur une surface prétraitée de manière adéquate de l'appui ou du guidage.

10. Procédé suivant la revendication 9, caractérisé en ce qu'il consiste à déposer la poudre par pistolage et à l'incoporer simultanément par fusion.

11. Procédé suivant la revendication 9, caractérisé en ce qu'il consiste à déposer la poudre par pistolage et à l'incorporer ensuite par fusion sous vide.

12. Procédé suivant la revendication 9, caractérisé en ce qu'il consiste à disperser la poudre et ensuite à l'incorporer par fusion sous vide dans une atmosphère inerte.
